# FASCICULE DE BREVET EUROPEEN

(11) **EP 3 405 380 B1**
(45) Date de publication et mention de la délivrance du brevet: **24.03.2021**
(21) Numéro de dépôt: 17700584.0
(22) Date de dépôt: 19.01.2017
(51) Int. Cl.: B62D 15/02, B60W 30/06

(54) **PROCÉDÉ DE SÉCURISATION D'UNE MANOEUVRE À APPLIQUER À UN VÉHICULE AUTOMOBILE**
VERFAHREN ZUM ABSICHERN EINES MANÖVERS EINES KRAFTFAHRZEUGS
METHOD FOR SAFELY MANOEUVERING A MOTOR VEHICLE

(30) Priorité: 19.01.2016 FR 1650418
(43) Date de publication de la demande: 28.11.2018
(73) Titulaire: Valeo Comfort and Driving Assistance, 94046 Créteil Cedex (FR)
(72) Inventeur: BOURASSI, Abdelhafid, 94046 Créteil Cedex (FR); ROBINEAU, José, 94046 Créteil Cedex (FR); PETEL, Laurent, 94046 Créteil Cedex (FR)
(74) Mandataire: Delplanque, Arnaud
(86) Numéro de dépôt international: PCT/EP2017/051119
(87) Numéro de publication internationale: WO 2017/125514

(56) Documents cités:
- EP-A2- 2 680 101
- EP-A2- 2 690 514
- CN-A- 105 100 374
- DE-A1-102012 007 984
- DE-A1-102014 011 809
- FR-A1- 3 008 366
- FR-A1- 3 017 096
- TW-A- 201 308 308

## Description

### DOMAINE TECHNIQUE DE L'INVENTION

La présente invention concerne un procédé de sécurisation d'une manœuvre à appliquer à un véhicule automobile.

Elle trouve une application particulière mais non limitative pour les manoeuvres qui permettent de garer un véhicule automobile.

### ARRIÈRE-PLAN TECHNOLOGIQUE DE L'INVENTION

Un procédé de sécurisation d'une manœuvre à appliquer à un véhicule automobile connu de l'homme du métier comprend l'utilisation par un utilisateur du véhicule automobile, d'un terminal mobile. Ce terminal mobile qui est par exemple un téléphone mobile, permet de commander à distance l'exécution d'une manœuvre sur le véhicule automobile. Une telle manœuvre est par exemple le fait de garer le véhicule automobile. L'utilisateur qui est situé à l'extérieur du véhicule automobile peut garer son véhicule automobile grâce à son téléphone mobile. A cet effet, il lance l'exécution de la manœuvre avec son terminal mobile et afin de vérifier que c'est bien toujours lui qui est aux commandes de la manœuvre, sur son téléphone mobile qu'il tient dans une de ses mains, il doit effectuer un mouvement continu sur l'écran du téléphone mobile, par exemple il doit décrire de façon continu un cercle sur tout l'écran du téléphone mobile pour que l'exécution de ladite manœuvre continue de se réaliser, voir FR3008366A.

On notera que le téléphone mobile comprend une antenne qui permet la communication entre ledit téléphone mobile et une antenne du véhicule automobile pour effectuer cette manœuvre à distance. Ladite antenne est par exemple disposée du côté avant du téléphone mobile, à savoir celui qui est dirigé en direction du véhicule automobile lorsque la manœuvre est réalisée. Un inconvénient de cet état de la technique réside dans le fait que la main de l'utilisateur qui tient le téléphone mobile risque de perturber l'antenne dudit téléphone mobile. En effet, la main risque de déformer le diagramme de rayonnement de l'antenne et risque donc de nuire à son efficacité. Cela peut entraîner une réduction du gain et de sa puissance rayonnée. Ainsi, cela peut entraîner des problèmes de communications entre ladite antenne et celle du véhicule automobile, et la manœuvre risque alors d'être arrêtée en cours d'exécution, indépendamment de la volonté de l'utilisateur.

Dans ce contexte, la présente invention vise à résoudre l'inconvénient précédemment mentionné.

### DESCRIPTION GENERALE DE L'INVENTION

A cette fin l'invention propose un procédé de sécurisation de l'exécution à distance d'une manœuvre de stationnement à appliquer à un véhicule automobile, selon lequel ledit procédé de sécurisation comporte :
- un envoi par une unité de commande électronique du véhicule automobile d'un ordre d'activation de premières données à un terminal mobile comprenant un écran (E) et une zone antenne (Z1);
- la réception par ledit terminal mobile dudit ordre d'activation ;
- un affichage des premières données sur l'écran dudit terminal mobile dans une zone opposée à ladite zone antenne de sorte à induire la réalisation d'un mouvement continu par un utilisateur sur l'écran dudit terminal mobile au niveau de ladite zone opposée, ladite zone opposée (Z2) est définie de sorte que le mouvement continu (Mv) de l'utilisateur (U) ne modifie pas le diagramme de rayonnement de ladite antenne (A) ;
- une génération de deuxièmes données par le terminal mobile relatives à la réalisation dudit mouvement continu par ledit utilisateur ;
- une comparaison desdites deuxièmes données avec un résultat attendu dépendant des premières données ;
- si la comparaison est positive, une exécution par l'unité de commande électronique de ladite manœuvre, lesdites étapes relatives aux premières données et aux deuxièmes données étant répétées jusqu'à l'exécution complète de la manœuvre.

Ainsi, comme on va le voir en détail ci-après, le fait d'induire l'utilisateur, qui commande la manœuvre via son téléphone mobile, d'effectuer le mouvement continu avec une main dans une zone opposée à celle où est placée l'antenne, va l'obliger à placer la main qui tient le téléphone mobile dans la même dite zone opposée. La main interfère ainsi beaucoup moins avec l'antenne de sorte que le gain de l'antenne n'est pas modifié. Sa puissance rayonnée n'est pas réduite en direction du véhicule et la communication antenne-véhicule automobile n'est pas perturbée. La manœuvre est ainsi sécurisée puisqu'elle ne risque pas d'être interrompue indépendamment de la volonté de l'utilisateur.

Selon des modes de réalisation non limitatifs, le procédé de sécurisation comporter en outre une ou plusieurs caractéristiques supplémentaires parmi les suivantes.

Dans un mode de réalisation non limitatif, l'affichage des premières données détermine au moins un point de contre-appui pour une prise en main du terminal mobile par un utilisateur au niveau de la zone opposée à ladite zone antenne.

Dans un mode de réalisation non limitatif, les premières données comportent un test de suivi point à point.

Dans un mode de réalisation non limitatif, le test suivi point à point comprend une flèche angulaire formant une indication de tracé à effectuer avec un doigt.

Dans un mode de réalisation non limitatif, le test suivi point à point comprend :
- une double flèche rectiligne formant une indication de tracé horizontal à effectuer avec un doigt ; et
- deux points disposés de part et d'autre de ladite flèche indiquant les limites du tracé.

Dans un mode de réalisation non limitatif, les premières données comportent en outre au moins un point de positionnement pour un des pouces de l'utilisateur.

Dans un mode de réalisation non limitatif, le test suivi point à point comprend un cercle avec une flèche indiquant un sens de déplacement.

Dans un mode de réalisation non limitatif, l'affichage des premières données sur l'écran du terminal mobile libère une zone intermédiaire pour l'affichage d'informations visuelles renvoyées par le véhicule automobile.

Dans un mode de réalisation non limitatif, les deuxièmes données comprennent des coordonnées du mouvement continu effectué par ledit utilisateur.

Dans un mode de réalisation non limitatif, la zone antenne est située sur un des côtés du terminal mobile et la zone opposée sur le côté en vis-à-vis.

Dans un mode de réalisation non limitatif, il comporte en outre un éclairage de l'écran dudit terminal mobile en fonction de son inclinaison.

Dans un mode de réalisation non limitatif, il comporte en outre un affichage d'une information relative à l'inclinaison dudit terminal mobile T.

Dans un mode de réalisation non limitatif, il comporte en outre une étape préliminaire d'envoi d'une requête relative à la manœuvre vers l'unité de commande électronique du véhicule automobile.

Dans un mode de réalisation non limitatif, la manœuvre est une manœuvre de déplacement du véhicule automobile entre une position initiale et une position finale.

Dans un mode de réalisation non limitatif, la comparaison desdites deuxièmes données avec ledit résultat attendu est effectué par le terminal mobile.

Dans un mode de réalisation non limitatif, le terminal mobile est un téléphone mobile ou un smartphone ou une tablette portable ou un objet connecté.

Il est également proposé un système de sécurisation de l'exécution à distance d'une manœuvre de stationnement à appliquer à un véhicule automobile, selon lequel ledit système de sécurisation comporte une unité de commande électronique du véhicule automobile et un terminal mobile comprenant un écran et une antenne dans une zone antenne, ledit système de sécurisation étant adapté pour :
- envoyer au moyen de ladite unité de commande électronique un ordre d'activation de premières données audit terminal mobile ;
- recevoir au moyen dudit terminal mobile ledit ordre d'activation ;
- afficher au moyen dudit terminal mobile les premières données sur son écran dans une zone opposée à ladite zone antenne de sorte à induire la réalisation d'un mouvement continu par un utilisateur sur l'écran dudit terminal mobile au niveau de ladite zone opposée, ladite zone opposée est définie de sorte que le mouvement continu de l'utilisateur ne modifie pas le diagramme de rayonnement de ladite antenne (A) ;
- générer au moyen dudit terminal mobile des deuxièmes données relatives à la réalisation dudit mouvement continu par ledit utilisateur ;
- comparer les deuxièmes données avec un résultat attendu dépendant des premières données, lesdites deuxièmes données étant générées relativement à la réalisation d'un mouvement continu par un utilisateur sur l'écran du terminal mobile ;
- si la comparaison est positive, exécuter au moyen de ladite unité de commande électronique ladite manœuvre.

Dans un mode de réalisation non limitatif, l'unité de commande électronique et le terminal mobile sont adaptés pour répéter lesdites étapes relatives aux premières données et aux deuxièmes données jusqu'à l'exécution complète de la manoeuvre.

### BREVE DESCRIPTION DES FIGURES

L'invention et ses différentes applications seront mieux comprises à la lecture de la description qui suit et à l'examen des figures qui l'accompagnent.
- la figure 1 est une vue schématique d'un procédé de sécurisation d'une manoeuvre à appliquer à un véhicule automobile selon un mode de réalisation non limitatif de l'invention ;
- la figure 2 est un schéma d'un téléphone mobile utilisé par le procédé de sécurisation de la figure 1, ledit téléphone mobile comprenant un écran sur lequel est affiché un test de suivi point à point selon une première variante de réalisation non limitative ;
- la figure 3 est un schéma d'un téléphone mobile utilisé par le procédé de sécurisation de la figure 1, ledit téléphone mobile comprenant un écran sur lequel est affiché un point de positionnement d'un pouce selon un mode de réalisation non limitatif ;
- la figure 4 est un schéma du téléphone mobile de la figure 3, sur l'écran duquel est affiché en outre un test de suivi point à point selon une deuxième variante de réalisation non limitative ;
- la figure 5 est un schéma du téléphone mobile de la figure 4 sur lequel est dessiné en outre une main d'un utilisateur qui tient ledit téléphone mobile et dont le pouce est positionné sur un point de positionnement dédié ;
- la figure 6 est un schéma d'un téléphone mobile utilisé par le procédé de sécurisation de la figure 1, ledit téléphone mobile comprenant un écran sur lequel est affiché un test de suivi point à point selon une troisième variante de réalisation non limitative ; et
- la figure 7 est un schéma d'un système de sécurisation adapté pour mettre en œuvre le procédé de sécurisation de la figure 1 selon un mode de réalisation non limitatif.

### DESCRIPTION DE MODES DE REALISATION DE L'INVENTION

Les éléments identiques, par structure ou par fonction, apparaissant sur différentes figures conservent, sauf précision contraire, les mêmes références.

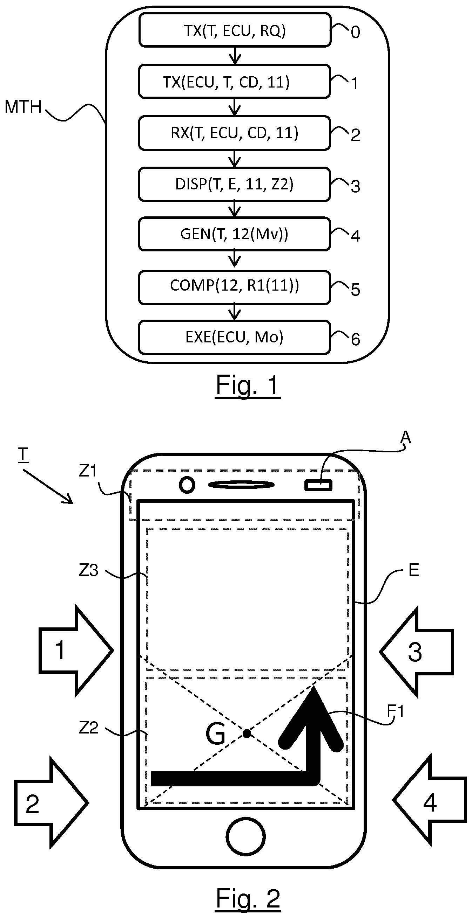

Un procédé MTH de sécurisation d'une manœuvre Mo à appliquer à un véhicule automobile V selon l'invention est illustré sur la figure 1.

Par véhicule automobile, on entend tout type de véhicule motorisé.
Le véhicule automobile V comprend une unité de commande électronique ECU et est adapté pour communiquer avec un terminal mobile T.
Dans un mode de réalisation non limitatif, le terminal mobile T est un téléphone mobile. Dans une variante de réalisation non limitative, le téléphone mobile T est un téléphone intelligent appelé « smartphone » en anglais.
Dans un autre mode de réalisation non limitatif, le terminal mobile T est une tablette.
Le terminal mobile T comprend :
- un écran E ; et
- une antenne A située dans une zone antenne Z1. Dans l'exemple illustré non limitatif sur les figures 2 à 6, la zone antenne Z1 est située sur le côté avant du terminal mobile T, à savoir sur le côté qui est dirigé en direction du véhicule automobile V lorsque la manœuvre Mo est effectuée.
   Dans les exemples non limitatifs des figures 2 à 6, le terminal mobile est un téléphone mobile ou un « smartphone ».

Grâce à son terminal mobile T, un utilisateur U va pouvoir commander à distance le lancement et l'exécution d'une manœuvre Mo, à savoir lorsqu'il est à l'extérieur du véhicule automobile V.

Dans un mode de réalisation non limitatif, la manœuvre Mo est une manœuvre de déplacement du véhicule automobile V entre une position initiale et une position finale.
Dans une première variante de réalisation non limitative, la manœuvre Mo est une manœuvre de parking. Ainsi, par exemple, cette manœuvre Mo permet de garer le véhicule automobile dans un emplacement de parking donné, la position initiale étant la position arrêtée du véhicule automobile V juste avant le début de l'exécution de la manœuvre Mo, et la position finale étant la position dans laquelle se trouve le véhicule automobile V lorsqu'il est garé. Cet exemple non limitatif est pris dans la suite de la description.
On notera que la manœuvre de parking peut être dans des exemples non limitatifs le fait de se garer en marche arrière ou en marche avant, et en épis bataille, ou de face ou de côté.
Dans une deuxième variante de réalisation non limitative, la manœuvre Mo est une manœuvre de sortie d'un parking, la position initiale étant la position arrêtée du véhicule automobile V juste avant le début de l'exécution de la manœuvre Mo, et la position finale étant la position dans laquelle se trouve le véhicule automobile V lorsqu'il est sorti de sa place de parking.
Cette manœuvre Mo de parking ou de sortie de parking permet de garer ou de sortir un véhicule automobile V tout en étant à l'extérieur dudit véhicule automobile (à savoir hors de son habitacle), par exemple dans le cas où il n'y a pas de place pour le conducteur de sortir dudit véhicule automobile lorsque ce dernier est dans un parking tel qu'un box par exemple ou parce que les véhicules automobiles adjacents gênent l'ouverture des portières.
On notera que la position initiale et la position finale sont connues du véhicule automobile V, de sorte que ce dernier sait quand arrêter l'exécution de la manœuvre Mo. Le véhicule automobile V connaît la position initiale et la position finale au moyen de capteur(s) de position et/ou de capteur(s) d'images, tels que des caméras vidéo ou des capteurs ultrasons ou tout autre type de capteurs à distance. Le véhicule automobile V va effectuer la manoeuvre Mo avec l'aide de ces capteurs.

Le procédé de sécurisation MTH comprend les étapes suivantes illustrées sur la figure 1.

On notera que pour lancer les étapes décrites ci-après, dans un mode de réalisation non limitatif, le procédé de sécurisation MTH comprend une étape préliminaire d'envoi (référencée 0) d'une requête RQ par le terminal mobile T relative à la manœuvre Mo vers l'unité de commande électronique ECU du véhicule automobile V (illustrée sur la figure 1 TX(T, ECU, RQ)). Cette requête RQ est initiée par l'utilisateur U du véhicule automobile au moyen du terminal mobile T.
L'utilisateur U peut volontairement demander, par l'intermédiaire du terminal mobile T, via une application dudit terminal mobile T, l'application d'une manœuvre Mo au véhicule automobile V.
Cette requête RQ permet :
- d'appairer le terminal mobile T et le véhicule automobile V, à savoir elle permet d'initier le dialogue entre le véhicule automobile V ;
- d'initier la manœuvre Mo à appliquer au véhicule automobile V ; et
- de démarrer le moteur du véhicule automobile V avant l'exécution de ladite manœuvre Mo si ledit moteur est arrêté.

Ainsi dans l'exemple non limitatif pris, l'utilisateur peut volontairement lancer la manœuvre Mo de parking du véhicule automobile V ou la manœuvre Mo de sortie d'une place de parking.
L'exécution de la manœuvre Mo et sa poursuite est faite par la suite grâce aux étapes présentées ci-dessous qui permettent de contrôler via le terminal mobile T que c'est bien toujours une personne qui contrôle l'exécution de la manœuvre Mo.

Le procédé MTH est ainsi effectué comme suit.

Lorsque le véhicule automobile V a détecté un emplacement pour se garer et qu'il est ainsi prêt à se garer ou lorsqu'il est prêt à quitter son emplacement de parking, **dans l'étape 1)** illustrée TX(ECU, T, CD, 11), l'unité de commande électronique ECU du véhicule automobile V envoie un ordre d'activation CD de premières données 11 audit terminal mobile T.

Dans un mode de réalisation non limitatif, les premières données 11 comprennent un test de suivi point à point TP.

Dans une première variante de réalisation non limitative, le test de suivi point à point TP comprend une flèche angulaire F1 formant une indication de tracé à effectuer avec un doigt.

Dans une deuxième variante de réalisation non limitative, le test de suivi point à point TP comprend :
- une double flèche rectiligne F2 formant une indication de tracé horizontal à effectuer avec un doigt ; et
- deux points P1, P1' disposés de part et d'autre de ladite flèche F2 indiquant les limites du tracé.

Dans un mode de réalisation non limitatif de cette deuxième variante de réalisation, les premières données 11 comprennent en outre au moins un point de positionnement P2 pour un des pouces d'un utilisateur.

Dans une troisième variante de réalisation non limitative, le test de suivi point à point TP comprend un cercle C1 avec une flèche indiquant un sens de déplacement du doigt.

Bien entendu, dans un mode de réalisation non limitatif, le test de suivi point à point TP peut comprendre toute autre forme géométrique.

On notera que dans un mode de réalisation non limitatif, les premières données 11 sont configurées dans le terminal mobile T lors de la fabrication ou le paramétrage du terminal mobile T.
Dans un autre mode de réalisation non limitatif, les premières données 11 sont configurées dans l'unité de commande électronique ECU du véhicule automobile V et sont envoyées audit terminal mobile T préalablement à l'ordre d'activation CD au terminal mobile T.

On notera que la détection d'un emplacement pour se garer est connue de l'homme du métier et n'est donc pas décrit ici.
On notera que le véhicule automobile est prêt à quitter son emplacement de parking à n'importe quel moment.

**Dans l'étape 2)** illustrée RX(T, ECU, CD, 11), le terminal mobile T reçoit de ladite unité de commande électronique ECU ledit ordre d'activation CD des premières données 11.

**Dans l'étape 3)** illustrée DISP(T, E, 11, Z2), suite à la réception de l'ordre d'activation CD, le terminal mobile T affiche sur son écran E les premières données 11 dans une zone opposée Z2 à ladite zone antenne Z1 de sorte à induire la réalisation d'un mouvement continu Mv par un utilisateur U sur l'écran E dudit terminal mobile T au niveau de ladite zone opposée Z2.

Dans un mode de réalisation non limitatif, la zone antenne Z1 est située sur un des côtés du terminal mobile T et la zone opposée Z2 sur le côté en vis-à-vis. Ainsi, dans l'exemple non limitatif illustré sur les figures 2 à 6, la zone antenne Z1 se situe côté avant du terminal mobile T, à savoir sur le côté qui est dirigé vers le véhicule automobile V et la zone opposée Z2 se situe côté arrière du terminal mobile T, à savoir sur le côté dirigé vers l'utilisateur U.
La zone opposée Z2 est définie de sorte que le mouvement continu Mv (décrit plus loin) de l'utilisateur U pour effectuer la manoeuvre Mo ne modifie pas le gain g de ladite antenne A et ne diminue donc pas sa puissance rayonnée.

La figure 2 illustre l'affichage sur l'écran E des premières données 11 comprenant le test de suivi point à point TP selon la première variante de réalisation non limitative à savoir la flèche angulaire F1 formant une indication de tracé à effectuer avec un doigt.
Ainsi, pour exécuter la manoeuvre Mo et tout au long de la manoeuvre Mo, un doigt de l'utilisateur U doit effectuer un mouvement continu Mv en suivant la flèche angulaire F1 et en faisant des allers-retours sur ladite flèche angulaire F1 jusqu'à ce que la manœuvre Mo soit terminée, à savoir jusqu'à ce que le véhicule automobile V ait atteint la position finale, c'est-à-dire jusqu'à ce qu'il se soit garé dans l'exemple non limitatif pris.

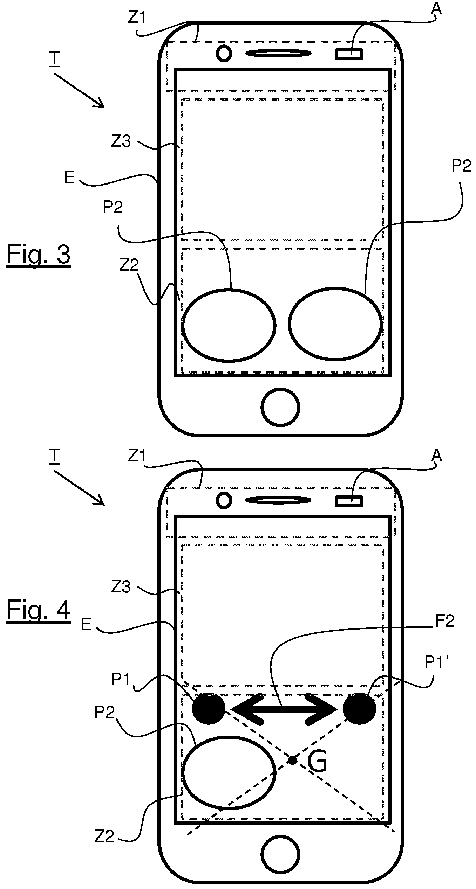

La figure 3 illustre l'affichage sur l'écran E des premières données 11 qui comprennent deux points de positionnement possibles P2, à savoir l'un pour le pouce de la main droite et l'autre pour le pouce de la main gauche.
Dans un mode de réalisation non limitatif, le terminal mobile T affiche sur son écran E un message demandant à l'utilisateur U de mettre un de ses pouces sur un des points de positionnement P2.

Dans un autre mode de réalisation non limitatif, avant l'affichage d'au moins un point de positionnement P2, le terminal mobile T affiche sur son écran E un message demandant à l'utilisateur U s'il est droitier ou gaucher. Suite à la réception de sa réponse, le terminal mobile T affiche le point de positionnement P2 approprié.

La figure 4 illustre le terminal mobile T de la figure 3 sur lequel est affiché en outre des premières données 11 comprenant le test de suivi point à point TP selon la deuxième variante de réalisation non limitative, à savoir :
- la double flèche rectiligne F2 formant une indication de tracé horizontal à effectuer avec un doigt ; et
- les deux points P1, P1' disposés de part et d'autre de ladite flèche F2 indiquant les limites du tracé.

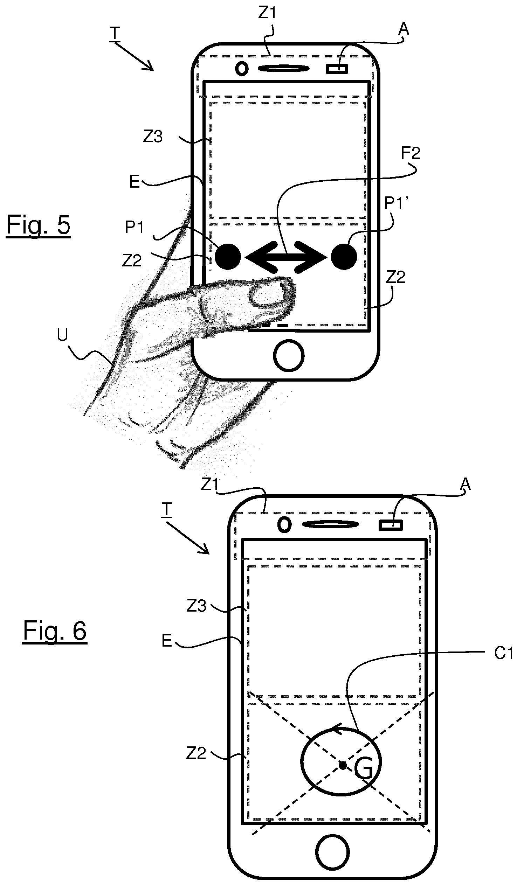

La figure 5 illustre :
- l'affichage sur l'écran E des données du test point à point TP de la figure 4;
- un des pouces de l'utilisateur U positionné sur le point de positionnement P2, dans l'exemple illustré non limitatif, à savoir le pouce de la main gauche ; et
- la prise en main du terminal mobile T par l'utilisateur U.
Ainsi, pour exécuter la manœuvre Mo et tout au long de la manœuvre Mo, un pouce d'une de ses mains de l'utilisateur U doit être positionné sur le point de positionnement P2 et dans le même temps, un doigt de l'autre main de l'utilisateur U doit effectuer un mouvement continu Mv rectiligne en suivant la flèche rectiligne F2 et en faisant des allers-retours sur la flèche rectiligne F2 jusqu'à ce que la manœuvre Mo soit terminée, à savoir jusqu'à ce que le véhicule automobile V ait atteint la position finale, c'est-à-dire jusqu'à ce qu'il se soit garé dans l'exemple non limitatif pris.

La figure 6 illustre l'affichage sur l'écran E des premières données 11 comprenant le test de suivi point à point TP selon la troisième variante de réalisation non limitative à savoir le cercle C1 formant une indication de tracé à effectuer avec un doigt.
Ainsi, pour exécuter la manœuvre Mo et tout au long de la manoeuvre Mo, un doigt de l'utilisateur U doit effectuer avec son doigt un mouvement continu Mv circulaire pour suivre le contour du cercle C1 dans le sens indiqué par la flèche et ce jusqu'à ce que la manoeuvre Mo soit terminée, , à savoir jusqu'à ce que le véhicule automobile V ait atteint la position finale, c'est-à-dire jusqu'à ce qu'il se soit garé dans l'exemple non limitatif pris.

On notera que le mouvement continu Mv effectué par l'utilisateur U permet de vérifier que l'utilisateur U est toujours présent et que c'est toujours lui qui commande la manoeuvre Mo le temps de son exécution. Ainsi, on s'assure que le véhicule automobile est sous contrôle d'un humain pour exécuter ladite manœuvre Mo.

Comme on peut le voir sur les figures 2, 4 et 6, l'affichage des premières données 11 détermine :
- un point d'équilibre G des forces entre la main qui tient le terminal mobile T et le doigt qui permet d'effectuer l'ensemble de la manœuvre Mo ;
- des points de contre-appui ramenés à la main référencés par les flèches 1, 2, 3 et/ou 4 pour une prise en main du terminal mobile T par un utilisateur U au niveau de la zone opposée Z2 à ladite zone antenne Z1.
Ainsi, l'affichage des premières données 11 induisent l'utilisateur U à positionner ses doigts dans une zone particulière qui est dans la zone opposée Z2.
Les flèches référencées 1 à 4 sur la figure 2 indiquent la prise en main du terminal mobile T par l'utilisateur U et ainsi quatre points de contre-appui. Dans l'exemple non limitatif de la figure 2, pour effectuer le tracé avec un doigt de l'autre main, l'utilisateur U est ainsi obligé de positionner sur la tranche du terminal mobile T son pouce, sa paume, son majeur (ou index) son annulaire respectivement comme indiqué par les quatre flèches 1, 2, 3 et 4 de la figure 2 pour tenir le terminal mobile T.
Dans l'exemple non limitatif des figure 4 et 5, pour effectuer le tracé avec un doigt de l'autre main, l'utilisateur U est ainsi obligé de positionner sur l'écran E du terminal mobile T son pouce sur l'écran du terminal mobile T et son index et son majeur sur le dos du terminal mobile T pour tenir le terminal mobile T. Le pouce est ici en opposition avec l'index et le majeur.

On notera que les points de contre-appui sont les contre-forces de réaction qu'il faut appliquer avec la main pour que le terminal mobile T soit stable dans la main de l'utilisateur U qui tient ledit terminal mobile T, contre-forces qui s'opposent à la force exercée par ledit utilisateur U avec son doigt pour effectuer l'ensemble de la manœuvre Mo. On notera que les points de contre-appui ainsi définis induisent une tenue par une main de l'utilisateur U qui est différente d'une tenue naturelle. Dans le cas d'une tenue naturelle, le point d'équilibre G se situe au centre du terminal mobile T de sorte que la main s'étend sur une grande partie du terminal mobile T, les points de contre-appui définis par les flèches 1 à 4 pouvant être dans ce cas n'importe où sur le terminal mobile T, ce qui est gênant pour le gain de l'antenne A qui à ce moment est modifié. En déplaçant le point d'équilibre G, on a réduit les perturbations émises par la main qui tient le terminal mobile T sur le gain de l'antenne A et en conséquence sur sa puissance rayonnée.
Par ailleurs, en induisant également un tracé par un doigt de l'utilisateur U au niveau de la zone opposée Z2 à celle de l'antenne A, on évite également que lors du tracé la main qui effectue ledit tracé ne vienne perturber également le gain de l'antenne A. Ainsi, le tracé d'un cercle sur une grande partie de l'écran E du terminal mobile T a été remplacé par le tracé d'une flèche F1 ou la double flèche F2 ou le cercle C1 dans une zone particulière.

L'antenne A n'est ainsi plus masquée par la main ou les doigts de l'utilisateur U. Il n'y a pas de dégradation de la puissance rayonnée de l'antenne A. La fonction de réception/transmission de signaux avec le véhicule automobile V n'est plus dégradée. La transmission de signaux assurée par l'antenne A est ainsi réalisée dans les meilleures conditions avec un bon seuil de réception/transmission. On se situe au dessus de ce seuil. La portée de communication avec le véhicule automobile V n'est ainsi pas diminuée. Les deuxièmes données 12 (décrites ci-après) peuvent être envoyées du terminal mobile T au véhicule automobile V sans perturbation et la manoeuvre Mo peut ainsi être effectuée en toute tranquillité. Le véhicule ne risque pas de s'arrêter de façon intempestive au cours de la manœuvre Mo.

Dans un mode de réalisation non limitatif, l'affichage des premières données 11 sur l'écran E du terminal mobile T libère une zone intermédiaire Z3 pour l'affichage d'informations visuelles renvoyées par le véhicule automobile V. Une telle zone Z3 est illustrée sur les figures 2 à 6. Ainsi, si des informations visuelles sont affichées sur l'écran E au niveau de cette zone intermédiaire Z3, cela permet de les conserver et de ne pas les masquer à cause de l'affichage de premières données 11, ce qui serait le cas si un test de suivi point à point (par exemple comprenant un cercle) qui s'affiche sur une grande partie de l'écran E était utilisé.

Dans un premier mode de réalisation non limitatif, le procédé de sécurisation MTH comporte en outre un éclairage de l'écran E dudit terminal mobile T en fonction de son inclinaison INC, à savoir en fonction de son angle d'inclinaison θ par rapport à la référence terre. A cet effet, un capteur de positionnement permet de fournir l'angle d'inclinaison 0 du terminal mobile T. Dans un exemple non limitatif, le capteur de positionnement est un gyroscope intégré au terminal mobile T.
Dans un mode de réalisation non limitatif, si l'inclinaison INC du terminal mobile T est comprise entre 30° et 60°, alors l'écran E est éclairé correctement, à savoir sa luminosité est comprise entre 100% et 20%, avec 100% le niveau maximum de visibilité et 20% le niveau minimum de visibilité avec confort. En dessous de 20%, la visibilité sera trop mauvaise pour l'utilisateur.

On notera que la valeur maximum de visibilité personnelle (correspondant donc à la luminosité de 100%) est définie par l'utilisateur comme étant son propre niveau de confort. Cette valeur maximum de visibilité personnelle est paramétrée par l'utilisateur dans le terminal mobile T.
On privilégie ainsi la lecture des données affichées sur l'écran E quand le terminal mobile T est positionné entre 30° et 60°.
Dans une variante de réalisation non limitative, si l'inclinaison INC du terminal mobile T est comprise entre 30° et 60°, alors la luminosité est de 100%.
Dans autre une variante de réalisation non limitative, si l'inclinaison INC du terminal mobile T est à 45°, alors l'écran est éclairé de façon optimum, à savoir sa luminosité est dans un exemple non limitatif égale à 100% et dès que l'inclinaison est différente de 45°, on décroît progressivement la luminosité jusqu'à ne plus rien voir si l'inclinaison INC est supérieure à 60° ou inférieure à 30°.
Dans un mode de réalisation non limitatif, si l'inclinaison INC du terminal mobile T est supérieure à 60° (le terminal mobile T tend à être debout) ou inférieure à 30° (le terminal mobile T tend à être à plat), l'écran E est moins bien éclairé, il est obscurcit, à savoir sa luminosité diminue et dans un exemple non limitatif, est inférieure à 20%.
Le fait d'asservir la luminosité sur l'angle d'inclinaison du terminal mobile T ajoute une contrainte à l'utilisateur U qui pour pouvoir lire les données affichées sur l'écran E doit incliner son terminal mobile T dans la plage de valeurs correcte, à savoir ici entre 30° et 60°. Cela permet de positionner le terminal mobile T de sorte que son antenne A communique correctement avec l'antenne B du véhicule automobile V. En effet, dans ce cas, la puissance rayonnée de l'antenne A est satisfaisante.

Dans un deuxième mode de réalisation non limitatif, le procédé de sécurisation MTH comporte en outre l'affichage d'une information DAT_INC relative à l'inclinaison INC dudit terminal mobile T, à savoir son angle d'inclinaison θ par rapport à la référence terre. Cela permet à l'utilisateur U d'incliner son terminal mobile T de sorte à avoir une puissance rayonnée de l'antenne A suffisante pour que cette dernière communique de façon correcte avec le véhicule automobile V.
En effet, si le terminal mobile T est mal incliné, les signaux envoyés par l'antenne A perdent de la puissance.
Dans un mode de réalisation non limitatif, si l'inclinaison INC du terminal mobile T est comprise entre 30° et 60°, la puissance rayonnée de l'antenne A est suffisante pour avoir une bonne communication. Dans une variante de réalisation non limitative, si l'inclinaison INC est de 45°, la communication est optimum.
A cet effet, dans un mode de réalisation non limitatif, le terminal mobile T comprend un indicateur d'inclinaison IND. Dans un exemple non limitatif, cet indicateur d'inclinaison IND est une jauge. L'information d'inclinaison DAT_INC est donc une jauge.
Cette jauge affiche un pourcentage de communication entre l'antenne A et le véhicule automobile V, et en outre :
- passe de la couleur verte à la couleur rouge lorsque l'inclinaison INC du terminal mobile T n'est plus correcte pour avoir une puissance rayonnée suffisante ;
- passe de la couleur rouge à la couleur verte lorsque l'inclinaison INC du terminal mobile T est correcte pour avoir une puissance rayonnée suffisante.

On notera qu'il y a un pré-calibrage de l'inclinaison en fonction de la puissance rayonnée de l'antenne A utilisée.

Bien entendu, le premier mode de réalisation avec l'éclairage et le deuxième mode de réalisation avec l'affichage de l'inclinaison peuvent être combinés. **Dans l'étape 4)** illustrée GEN(T, 12(Mv)), le terminal mobile T génère des deuxièmes données 12 relatives à la réalisation dudit mouvement continu Mv par ledit utilisateur U.

Dans un mode de réalisation non limitatif, les deuxièmes données 12 comprennent des coordonnées du mouvement continu Mv effectué sur l'écran E par ledit utilisateur U, à savoir les coordonnées du tracé effectué par l'utilisateur humain U.
Ainsi, le terminal mobile T enregistre de façon continue les coordonnées du tracé effectué par l'utilisateur U. Il enregistre ainsi le mouvement du doigt de l'utilisateur U.
Dans la première variante de réalisation non limitative du suivi point à point TP, les coordonnées enregistrées sont celles du tracé effectué par le doigt sur la flèche angulaire F1, à savoir les allers-retours le long de ladite flèche sur l'écran E.
Dans la deuxième variante de réalisation non limitative du suivi point à point TP, les coordonnées enregistrées sont celles du tracé effectué par le doigt sur la flèche rectiligne F2, à savoir les allers-retours le long de ladite flèche. Dans la troisième variante de réalisation non limitative du suivi point à point TP, les coordonnées enregistrées sont celles du tracé effectué par le doigt sur le cercle C1, à savoir les itérations circulaires.

**Dans l'étape 5)** illustrée COMP(12, R1(11)), lesdites deuxièmes données 12 sont comparées avec un résultat attendu R1 dépendant des premières données 11.

Ainsi, le tracé réellement effectué par l'utilisateur U est comparé avec un tracé théorique correspondant au suivi de test point à point à réaliser, le tracé théorique étant le résultat attendu R1 du suivi de test point à point.

Les deuxièmes données 12 sont ainsi validées ou invalidées.

Les deuxièmes données 12 peuvent par exemple être invalidées si :
- dans l'exemple d'un test de suivi point à point, un tracé inexact ou trop imprécis a été réalisé par l'utilisateur U. L'utilisateur U n'a ainsi pas fait le bon geste ; ou
- la transmission desdites deuxièmes données 12 n'aboutit pas.

Dans un mode de réalisation non limitatif, la comparaison est effectuée par le terminal mobile T.
Ainsi, le terminal mobile T assure la fonction dite de l'homme mort appelée en anglais « dead man » dans son ensemble, à savoir il s'assure que le doigt est toujours en mouvement et fait bien le tracé pour vérifier que la manœuvre est toujours sous contrôle de l'utilisateur U.

Le terminal mobile T envoie régulièrement le résultat R2 de la comparaison à l'unité de commande électronique ECU (étape non illustrée). Dans un mode de réalisation non limitatif, le résultat R2 de la comparaison est envoyé à une fréquence de 30 millisecondes afin d'assurer un contrôle temps réel.
Le résultat R2 de la comparaison est soit un état valide, soit un état non valide.

Dans un mode de réalisation non limitatif, l'envoi du résultat R2 est effectué si un identifiant mains libres ID du véhicule automobile V est actif, à savoir s'il est reconnu par ledit véhicule automobile V.
Un tel identifiant mains libres ID permet d'effectuer une fonction dite mains libres, à savoir d'ouvrir automatiquement un ouvrant (portière, coffre, hayon) du véhicule automobile V sans action de l'utilisateur.
Un tel identifiant mains libres ID est reconnu par le véhicule automobile V s'il se situe à proximité dudit véhicule automobile V, à savoir entre 2 et 4 mètres. En effet, l'identifiant ID communique avec ledit véhicule automobile V en basse fréquence.
Ainsi, on conditionne l'envoi du résultat R2 (par le protocole de communication Bluetooth par exemple) par l'activation de l'identifiant mains libres ID ce qui permet d'être sûr que l'utilisateur U est à une distance de 2 à 4 mètres, à savoir à une distance à laquelle il a bien l'intention de commander une manœuvre Mo à appliquer au véhicule automobile V et que le véhicule automobile V est bien à portée de sa vue. On n'est ainsi sûr que l'utilisateur U n'est pas à 10 mètres par exemple et qu'il «joue» avec l'application sur son terminal mobile T qui permet de lancer la manoeuvre Mo.

On notera que les résultats R2 des comparaisons successives sont des données numériques. Elles vont être modifiées par un étage de transmission pour être transmise via l'antenne A à l'antenne B du véhicule automobile V. L'étage de transmission (non illustré) comprend de manière connue de l'homme du métier notamment :
- un convertisseur numérique analogique pour transformer les données numériques en données analogiques basse fréquence (de l'ordre de quelques centaines de Kilohertz);
- une unité de transposition de fréquences pour passer de la basse fréquence à la fréquence de l'antenne A (à savoir la fréquence Bluetooth®, soit 2,4GigaHerz dans un exemple non limitatif) ;
- un amplificateur de signal pour amplifier les données analogiques ;
- l'antenne A du terminal mobile T pour :
   - convertir les données analogiques en des signaux électromagnétiques ;
   - envoyer les signaux électromagnétiques à l'antenne B du véhicule automobile V, lesdits signaux électromagnétiques étant restitués en données numériques compréhensibles par l'unité de commande électronique ECU du véhicule automobile V via un autre étage de réalisation inverse à la transmission, appelé étage de réception, côté véhicule automobile V.

Dans un autre mode de réalisation non limitative, l'unité de commande électronique ECU peut effectuer la comparaison avec le résultat attendu R1 dépendant des premières données 11. Dans ce cas, les deuxièmes données 12 sont envoyées par le terminal mobile T vers l'unité de commande électronique ECU pour que cette dernière puisse effectuer la comparaison.

**Dans l'étape 6)** illustrée EXE(ECU, Mo), si la comparaison est positive, l'unité de commande électronique ECU exécute ladite manoeuvre Mo, lesdites étapes relatives aux premières données 11 et aux deuxièmes données 12 étant répétées jusqu'à l'exécution complète de la manœuvre Mo.

On notera que lorsque la comparaison décrite précédemment est effectuée par le terminal mobile T, les étapes relatives aux premières données 11 et aux deuxièmes données 12 sont répétées dans le terminal mobile T jusqu'à l'exécution complète de la manœuvre Mo.

Si la comparaison est positive, à savoir le résultat R2 de la comparaison est un état valide, les deuxièmes données 12 sont validées, à savoir le tracé réel est égal au tracé théorique, et la manœuvre Mo (ici le fait de garer le véhicule automobile V dans l'exemple non limitatif pris) est exécutée et poursuivie tant que la comparaison est positive.

Si la comparaison est négative, à savoir le résultat R2 de la comparaison est un état non valide, les deuxièmes données 12 sont invalidées, à savoir le tracé réel est différent du tracé théorique, et la manœuvre Mo, (ici le fait de garer le véhicule automobile V dans l'exemple non limitatif pris), n'est pas exécutée ou n'est pas poursuivie. Ainsi, même si elle a commencé, dès que la comparaison devient négative, alors la manœuvre Mo est arrêtée.

Lorsque le mouvement continu Mv s'arrête, l'exécution de la manœuvre est stoppée. Ainsi, si un obstacle mobile (une personne, un autre véhicule automobile, un animal etc.) se rapproche du véhicule automobile V, il suffit que l'utilisateur U arrête le tracé pour que le véhicule automobile s'arrête.

On notera que les étapes relatives aux premières données 11 et aux deuxièmes données 12, à savoir la génération des premières données 11, leur affichage, la génération des deuxièmes données et leur comparaison, sont répétés jusqu'à l'exécution complète de la manœuvre Mo.

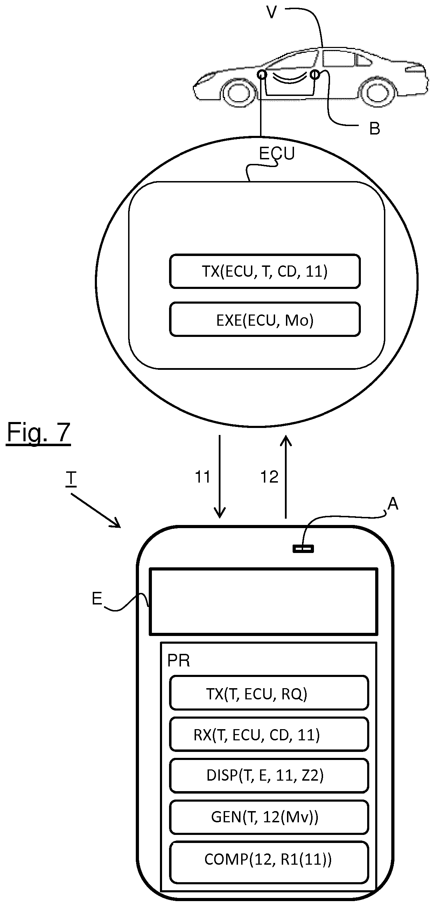

Ainsi, le procédé MTH décrit ci-dessus est exécuté par un système de sécurisation d'une manœuvre Mo à appliquer au véhicule automobile V. Ce système est décrit à la figure 7. Il comprend :
- l'unité de commande électronique ECU du véhicule automobile V ; et
- le terminal mobile T.

Le terminal mobile T et le véhicule automobile V sont adaptés pour communiquer entre eux via des antennes A et B respectives.

L'unité de commande électronique ECU du véhicule automobile V est adaptée pour :
- envoyer un ordre d'activation CD des premières données 11 vers un terminal mobile T comportant un écran E et une antenne A située dans une zone antenne Z1 (fonction illustrée sur la figure 7 TX(ECU, T, CD, 11));
- si la comparaison est positive, exécuter ladite manœuvre Mo (fonction illustrée sur la figure 7 EXE(ECU, Mo)).

Le terminal mobile T comprend un écran E tactile et ladite antenne A dans ladite zone antenne Z1.
Dans un mode de réalisation non limitatif, l'antenne A communique avec le véhicule automobile V, en particulier avec une de ses antennes B via le protocole WIFI™ ou Bluetooth®.

On notera que pour une manœuvre de parking ou de sortie de parking, l'utilisateur se place à environ 2 à 4 mètres de son véhicule automobile V. Dans un mode de réalisation non limitatif, la puissance rayonnée théorique de l'antenne A est de 15 mètres.
On notera que du fait de son environnement, la portée de l'antenne A n'est pas optimum. En effet, sa puissance rayonnée est réduite en raison notamment des phénomènes d'évanouissement local de signal, appelé en anglais « fadding », dus aux réflexions des signaux émis par l'antenne A sur des obstacles dans son environnement tels que des murs par exemple. De ce fait, sa portée peut en pratique être limitée à 7 mètres dans un exemple non limitatif au lieu de 15 mères pour une portée théorique dans un exemple non limitatif.
Lorsque l'antenne A du terminal mobile T communique avec l'antenne B du véhicule automobile V, son diagramme de rayonnement coopère avec celui de l'antenne B. Or les diagrammes de rayonnement n'étant pas homogènes, lorsque le véhicule effectue la manœuvre Mo, il peut tourner. La coopération entre les deux diagrammes peut ainsi varier et entraîner une variation de la portée de l'antenne A. Cette dernière peut ainsi devenir inférieure à 7 mètres dans l'exemple non limitatif donné.
Le fait que la main de l'utilisateur ne perturbe plus ou très peu l'antenne A évite de réduire encore plus sa portée, jusqu'à 1 à 1,5 mètres par exemple (alors que l'utilisateur U est entre 2 et 4 mètres du véhicule automobile). Ainsi, la portée de l'antenne A, même réduite en raison de son environnement et de la variation de la coopération entre les deux diagrammes de rayonnement des deux antennes A et B, demeure suffisante pour que la manœuvre Mo s'exécute sans encombre.

Le terminal mobile T est adapté pour :
- recevoir de ladite unité de commande électronique l'ordre d'activation CD des premières données 11 (fonction illustrée sur la figure 7 RX(T, ECU, CD, 11) ;
- afficher les premières données 11 sur son écran E dans une zone opposée Z2 à ladite zone antenne Z1 de sorte à induire la réalisation d'un mouvement continu Mv par un utilisateur U sur l'écran E dudit terminal mobile T au niveau de ladite zone opposée Z2 (fonction illustrée sur la figure 7 DISP(T, E, 11, Z2)) ;
- générer lesdites deuxièmes données 12 relatives à la réalisation dudit mouvement continu Mv par ledit utilisateur U (fonction illustrée sur la figure 7 GEN(T, 12(Mv))).

Dans le mode de réalisation non limitatif illustré, le terminal mobile T est en outre adapté pour comparer des deuxièmes données 12 avec un résultat attendu R1 dépendant des premières données 11, lesdites deuxièmes données étant générées relativement à la réalisation d'un mouvement continu Mv par ledit utilisateur U sur l'écran E du terminal mobile T (fonction illustrée sur la figure 7 COMP(12, R1(11)).

Dans un mode de réalisation non limitatif, le terminal mobile T est en outre adapté pour envoyer une requête RQ relative à la manœuvre Mo vers l'unité de commande électronique ECU du véhicule automobile V (fonction illustrée sur la figure 7 TX(T, ECU, RQ)).

Le terminal mobile T comprend une unité de traitement PR pour effectuer les fonctions citées ci-dessus. L'unité de traitement PR comprend un ou plusieurs processeurs.

Dans un mode de réalisation non limitatif, l'unité de commande électronique ECU et le terminal mobile T (en particulier son unité de traitement PR) sont adaptés pour répéter lesdites étapes relatives aux premières données 11 et aux deuxièmes données 12 jusqu'à l'exécution complète de la manœuvre Mo.

Bien entendu la description de l'invention n'est pas limitée aux modes de réalisation décrits ci-dessus.
Ainsi, le procédé peut être applicable à tout engin motorisé dans lequel une manœuvre Mo serait commandée via une unité extérieure audit engin motorisé, tels que dans des exemples non limitatifs des appareils pilotables à distance comme des modèles réduits ou des drones.
Ainsi, au lieu d'effectuer le test de suivi point à point TP avec un de ses doigts, l'utilisateur U peut utiliser un stylet.
Ainsi, l'affichage de premières données 11 dans la zone opposée Z2 autres qu'une flèche ou une double flèche ou une cercle peut être effectuée.

Ainsi, l'invention décrite présente notamment les avantages suivants :
- elle ne modifie pas le diagramme de rayonnement de l'antenne, autrement dit elle ne modifie pas le gain de l'antenne dans toutes les directions. L'antenne n'est ainsi pas perturbée lors de la transmission/réception de signaux ;
- elle évite que le véhicule automobile V s'arrête de manière intempestive au milieu de la manœuvre Mo indépendamment de la volonté de l'utilisateur qui commande la manœuvre Mo et ce sans modifier l'antenne A pour augmenter ses performances par exemple ;
- elle permet de demeurer au dessus du seuil de réception/transmission de signaux par l'antenne A ;
- elle permet d'appliquer une manœuvre Mo au véhicule automobile V de façon sécurisée, sans modifier les performances de l'antenne A et sans changer l'antenne A. Elle est donc peu coûteuse à mettre en œuvre ;
- elle est simple à mettre en œuvre ;
- elle permet sans modifier son fonctionnement ou ses performances d'utiliser un terminal mobile T pour commander le lancement et l'exécution d'une manœuvre et réaliser la fonction de « dead man ».

## Revendications

1. Procédé de sécurisation de l'exécution à distance d'une manœuvre (Mo) pour garer un véhicule automobile (V), selon lequel ledit procédé de sécurisation (MTH) comporte :
- un envoi par une unité de commande électronique (ECU) du véhicule automobile (V) d'un ordre d'activation (CD) de premières données (11) à un terminal mobile (T) comprenant un écran (E) et une zone antenne (Z1);
- la réception par ledit terminal mobile (T) dudit ordre d'activation (CD) ;
- un affichage des premières données (11) sur l'écran (E) dudit terminal mobile (T) dans une zone opposée (Z2) à ladite zone antenne (Z1) de sorte à induire la réalisation d'un mouvement continu (Mv) par un utilisateur (U) sur l'écran (E) dudit terminal mobile (T) au niveau de ladite zone opposée (Z2), ladite zone opposée (Z2) est définie de sorte que le mouvement continu (Mv) de l'utilisateur (U) ne modifie pas le diagramme de rayonnement de ladite antenne (A) ;
- une génération de deuxièmes données (12) par le terminal mobile (T) relatives à la réalisation dudit mouvement continu (Mv) par ledit utilisateur (U) ;
- une comparaison desdites deuxièmes données (12) avec un résultat attendu (R1) dépendant des premières données (11) ;
- si la comparaison est positive, une exécution par l'unité de commande électronique (ECU) de ladite manœuvre (Mo), lesdites étapes relatives aux premières données (11) et aux deuxièmes données (12) étant répétées jusqu'à l'exécution complète de la manœuvre (Mo).

2. Procédé de sécurisation (MTH) selon la revendication 1, selon lequel l'affichage des premières données (11) détermine au moins un point de contre-appui pour une prise en main du terminal mobile (T) par un utilisateur (U) au niveau de la zone opposée (Z2) à ladite zone antenne (Z1).

3. Procédé de sécurisation (MTH) selon l'une quelconque des revendications précédentes 1 à 2, selon lequel les premières données (11) comportent un test de suivi point à point (TP).

4. Procédé de sécurisation (MTH) selon la revendication 3, selon lequel le test suivi point à point (TP) comprend une flèche angulaire (F1) formant une indication de tracé à effectuer avec un doigt.

5. Procédé de sécurisation (MTH) selon la revendication 3, selon lequel le test suivi point à point (TP) comprend :
- une double flèche rectiligne (F2) formant une indication de tracé horizontal à effectuer avec un doigt ; et
- deux points (P1, P1') disposés de part et d'autre de ladite flèche (F2) indiquant les limites du tracé.

6. Procédé de sécurisation (MTH) selon la revendication précédente 5, selon lequel les premières données (11) comportent en outre au moins un point de positionnement (P2) pour un des pouces de l'utilisateur (U).

7. Procédé de sécurisation (MTH) selon la revendication 3, selon lequel le test suivi point à point (TP) comprend un cercle (C1) avec une flèche indiquant un sens de déplacement.

8. Procédé de sécurisation (MTH) selon l'une quelconque des revendications précédentes 1 à 7, selon lequel l'affichage des premières données (11) sur l'écran (E) du terminal mobile (T) libère une zone intermédiaire (Z3) pour l'affichage d'informations visuelles renvoyées par le véhicule automobile (V).

9. Procédé de sécurisation (MTH) selon l'une quelconque des revendications précédentes 1 à 8, selon lequel les deuxièmes données (12) comprennent des coordonnées du mouvement continu (Mv) effectué par ledit utilisateur (U).

10. Procédé de sécurisation (MTH) selon l'une quelconque des revendications précédentes 1 à 9, selon lequel la zone antenne (Z1) est située sur un des côtés du terminal mobile (T) et la zone opposée (Z2) sur le côté en vis-à-vis.

11. Procédé de sécurisation (MTH) selon l'une quelconque des revendications précédentes 1 à 10, selon lequel il comporte en outre un éclairage de l'écran (E) dudit terminal mobile (T) en fonction de son inclinaison (INC).

12. Procédé de sécurisation (MTH) selon l'une quelconque des revendications précédentes 1 à 11, selon lequel il comporte en outre un affichage d'une information (DAT_INC) relative à l'inclinaison (INC) dudit terminal mobile T.

13. Procédé de sécurisation (MTH) selon l'une quelconque des revendications précédentes 1 à 12, selon lequel il comporte en outre une étape préliminaire d'envoi d'une requête (RQ) relative à la manœuvre (Mo) vers l'unité de commande électronique (ECU) du véhicule automobile (V).

14. Procédé de sécurisation (MTH) selon l'une quelconque des revendications précédentes 1 à 13, selon lequel la manœuvre (Mo) est une manœuvre de déplacement du véhicule automobile (V) entre une position initiale et une position finale.

15. Procédé de sécurisation (MTH) selon l'une quelconque des revendications précédentes 1 à 14, selon lequel la comparaison desdites deuxièmes données (12) avec ledit résultat attendu (R1) est effectué par le terminal mobile (T).

16. Système de sécurisation (SYS) de l'exécution à distance d'une manœuvre (Mo) pour garer un véhicule automobile (V), selon lequel ledit système de sécurisation (SYS) comporte une unité de commande électronique (ECU) du véhicule automobile (V) et un terminal mobile (T) comprenant un écran (E) et une antenne (A) dans une zone antenne (Z1), ledit système de sécurisation (SYS) étant adapté pour :
- envoyer au moyen de ladite unité de commande électronique (ECU) un ordre d'activation de premières données (11) audit terminal mobile (T) ;
- recevoir au moyen dudit terminal mobile (T) ledit ordre d'activation (CD) ;
- afficher au moyen dudit terminal mobile (T) les premières données (11) sur son écran (E) dans une zone opposée (Z2) à ladite zone antenne (Z1) de sorte à induire la réalisation d'un mouvement continu (Mv) par un utilisateur (U) sur l'écran (E) dudit terminal mobile (T) au niveau de ladite zone opposée (Z2), ladite zone opposée (Z2) est définie de sorte que le mouvement continu (Mv) de l'utilisateur (U) ne modifie pas le diagramme de rayonnement de ladite antenne (A) ;
- générer au moyen dudit terminal mobile (T) des deuxièmes données (12) relatives à la réalisation dudit mouvement continu (Mv) par ledit utilisateur (U) ;
- comparer les deuxièmes données (12) avec un résultat attendu (R1) dépendant des premières données (11), lesdites deuxièmes données étant générées relativement à la réalisation d'un mouvement continu (Mv) par un utilisateur (U) sur l'écran (E) du terminal mobile (T) ;
- si la comparaison est positive, exécuter au moyen de ladite unité de commande électronique (ECU) ladite manœuvre (Mo).

17. Système de sécurisation (SYS) d'une manœuvre (Mo) à appliquer à un véhicule automobile (V) selon la revendication précédente 16, selon lequel l'unité de commande électronique (ECU) et le terminal mobile (T) sont adaptés pour répéter lesdites étapes relatives aux premières données (11) et aux deuxièmes données (12) jusqu'à l'exécution complète de la manœuvre (Mo).

## Patentansprüche

1. Verfahren zum Absichern der Fernausführung eines Manövers (Mo) zum Parken eines Kraftfahrzeugs (V), wobei das Absicherungsverfahren (MTH) Folgendes umfasst:
- Senden, durch eine elektronische Steuereinheit (ECU) des Kraftfahrzeugs (V), eines Befehls zum Aktivieren (CD) erster Daten (11) an ein mobiles Endgerät (T), das einen Bildschirm (E) und einen Antennenbereich (Z1) beinhaltet;
- Empfangen, durch das mobile Endgerät (T), des Aktivierungsbefehls (CD);
- Anzeigen der ersten Daten (11) auf dem Bildschirm (E) des mobilen Endgeräts (T) in einem dem Antennenbereich (Z1) gegenüberliegenden Bereich (Z2), um das Erzeugen einer kontinuierlichen Bewegung (Mv) durch einen Benutzer (U) auf dem Bildschirm (E) des mobilen Endgeräts (T) in dem gegenüberliegenden Bereich (Z2) zu bewirken, wobei der gegenüberliegende Bereich (Z2) so definiert ist, dass die kontinuierliche Bewegung (Mv) des Benutzers (U) das Strahlungsdiagramm der Antenne (A) nicht verändert;
- Generieren zweiter Daten (12) durch das mobile Endgerät (T) in Bezug auf das Erzeugen der kontinuierlichen Bewegung (Mv) durch den Benutzer (U);
- Vergleichen der zweiten Daten (12) mit einem erwarteten Ergebnis (R1), das von den ersten Daten (11) abhängt;
- wenn der Vergleich positiv ist, Ausführen, durch die elektronische Steuereinheit (ECU), des Manövers (Mo), wobei die Schritte in Bezug auf die ersten Daten (11) und die zweiten Daten (12) bis zur vollständigen Ausführung des Manövers (Mo) wiederholt werden.

2. Absicherungsverfahren (MTH) nach Anspruch 1, wobei das Anzeigen der ersten Daten (11) mindestens einen Abstützpunkt für ein Halten des mobilen Endgeräts (T) durch einen Benutzer (U) in dem dem Antennenbereich (Z1) gegenüberliegenden Bereich (Z2) bestimmt.

3. Absicherungsverfahren (MTH) nach einem der vorhergehenden Ansprüche 1 bis 2, wobei die ersten Daten (11) einen Punkt-zu-Punkt-Nachverfolgungstest (TP) umfassen.

4. Absicherungsverfahren (MTH) nach Anspruch 3, wobei der Punkt-zu-Punkt-Nachverfolgungstest (TP) einen winkelförmigen Pfeil (F1) beinhaltet, der eine Angabe zu einem Verlauf, der mit einem Finger vorzunehmen ist, bildet.

5. Absicherungsverfahren (MTH) nach Anspruch 3, wobei der Punkt-zu-Punkt-Nachverfolgungstest (TP) Folgendes beinhaltet:
- einen geradlinigen Doppelpfeil (F2), der eine Angabe zu einem horizontalen Verlauf, der mit einem Finger vorzunehmen ist, bildet; und
- zwei Punkte (P1, P1'), die auf beiden Seiten des Pfeils (F2) angeordnet sind und die Grenzen des Verlaufs angeben.

6. Absicherungsverfahren (MTH) nach Anspruch 5, wobei die ersten Daten (11) ferner mindestens einen Positionierungspunkt (P2) für einen der Daumen des Benutzers (U) umfassen.

7. Absicherungsverfahren (MTH) nach Anspruch 3, wobei der Punkt-zu-Punkt-Nachverfolgungstest (TP) einen Kreis (C1) mit einem Pfeil, der eine Bewegungsrichtung angibt, beinhaltet.

8. Absicherungsverfahren (MTH) nach einem der vorhergehenden Ansprüche 1 bis 7, wobei das Anzeigen der ersten Daten (11) auf dem Bildschirm (E) des mobilen Endgeräts (T) einen Zwischenbereich (Z3) zum Anzeigen visueller Informationen, die von dem Kraftfahrzeug (V) zurückgesendet werden, freilässt.

9. Absicherungsverfahren (MTH) nach einem der vorhergehenden Ansprüche 1 bis 8, wobei die zweiten Daten (12) Koordinaten der durch den Benutzer (U) vorgenommenen kontinuierlichen Bewegung (Mv) beinhalten.

10. Absicherungsverfahren (MTH) nach einem der vorhergehenden Ansprüche 1 bis 9, wobei sich der Antennenbereich (Z1) auf einer der Seiten des mobilen Endgeräts (T) und der gegenüberliegende Bereich (Z2) auf der entgegengesetzten Seite befindet.

11. Absicherungsverfahren (MTH) nach einem der vorhergehenden Ansprüche 1 bis 10, wobei es ferner eine Beleuchtung des Bildschirms (E) des mobilen Endgeräts (T) in Abhängigkeit von dessen Neigung (INC) umfasst.

12. Absicherungsverfahren (MTH) nach einem der vorhergehenden Ansprüche 1 bis 11, wobei es ferner ein Anzeigen einer Information (DAT_INC) in Bezug auf die Neigung (INC) des mobilen Endgeräts T umfasst.

13. Absicherungsverfahren (MTH) nach einem der vorhergehenden Ansprüche 1 bis 12, wobei es ferner einen vorausgehenden Schritt des Sendens einer Anfrage (RQ) in Bezug auf das Manöver (Mo) an die elektronische Steuereinheit (ECU) des Kraftfahrzeugs (V) umfasst.

14. Absicherungsverfahren (MTH) nach einem der vorhergehenden Ansprüche 1 bis 13, wobei das Manöver (Mo) ein Manöver zum Bewegen des Kraftfahrzeugs (V) zwischen einer Anfangsposition und einer Endposition ist.

15. Absicherungsverfahren (MTH) nach einem der vorhergehenden Ansprüche 1 bis 14, wobei das Vergleichen der zweiten Daten (12) mit dem erwarteten Ergebnis (R1) durch das mobile Endgerät (T) vorgenommen wird.

16. System zum Absichern (SYS) der Fernausführung eines Manövers (Mo) zum Parken eines Kraftfahrzeugs (V), wobei das Absicherungssystem (SYS) eine elektronische Steuereinheit (ECU) des Kraftfahrzeugs (V) und ein mobiles Endgerät (T), das einen Bildschirm (E) und eine Antenne (A) in einem Antennenbereich (Z1) beinhaltet, umfasst, wobei das Absicherungssystem (SYS) für Folgendes ausgelegt ist:
- Senden, mit Hilfe der elektronischen Steuereinheit (ECU), eines Befehls zum Aktivieren erster Daten (11) an das mobile Endgerät (T);
- Empfangen, mit Hilfe des mobilen Endgeräts (T), des Aktivierungsbefehls (CD);
- Anzeigen, mit Hilfe des mobilen Endgeräts (T), der ersten Daten (11) auf seinem Bildschirm (E) in einem dem Antennenbereich (Z1) gegenüberliegenden Bereich (Z2), um das Erzeugen einer kontinuierlichen Bewegung (Mv) durch einen Benutzer (U) auf dem Bildschirm (E) des mobilen Endgeräts (T) in dem gegenüberliegenden Bereich (Z2) zu bewirken, wobei der gegenüberliegende Bereich (Z2) so definiert ist, dass die kontinuierliche Bewegung (Mv) des Benutzers (U) das Strahlungsdiagramm der Antenne (A) nicht verändert;
- Generieren, mit Hilfe des mobilen Endgeräts (T), zweiter Daten (12) in Bezug auf das Erzeugen der kontinuierlichen Bewegung (Mv) durch den Benutzer (U);
- Vergleichen der zweiten Daten (12) mit einem erwarteten Ergebnis (R1), das von den ersten Daten (11) abhängt, wobei die zweiten Daten in Bezug auf das Erzeugen einer kontinuierlichen Bewegung (Mv) durch einen Benutzer (U) auf dem Bildschirm (E) des mobilen Endgeräts (T) generiert werden;
- wenn der Vergleich positiv ist, Ausführen des Manövers (Mo) mit Hilfe der elektronischen Steuereinheit (ECU).

17. System zum Absichern (SYS) eines Manövers (Mo), das auf ein Kraftfahrzeug (V) anzuwenden ist, nach dem vorhergehenden Anspruch 16, wobei die elektronische Steuereinheit (ECU) und das mobile Endgerät (T) dazu ausgelegt sind, die Schritte in Bezug auf die ersten Daten (11) und die zweiten Daten (12) bis zur vollständigen Ausführung des Manövers (Mo) zu wiederholen.

## Claims

1. Method for securing the remote execution of a manoeuvre (Mo) for parking a motor vehicle (V), according to which said securing method (MTH) comprises:
- an electronic control unit (ECU) of the motor vehicle (V) sending an order (CD) to activate first data (11) to a mobile terminal (T) comprising a screen (E) and an antenna zone (Z1);
- said mobile terminal (T) receiving said activation order (CD);
- displaying the first data (11) on the screen (E) of said mobile terminal (T) in a zone (Z2) opposite said antenna zone (Z1) so as to induce the performance of a continuous movement (Mv) by a user (U) on the screen (E) of said mobile terminal (T) at said opposite zone (Z2), said opposite zone (Z2) being defined so that the continuous movement (Mv) of the user (U) does not modify the radiation pattern of said antenna (A);
- the mobile terminal (T) generating second data (12) relating to the performance of said continuous movement (Mv) by said user (U) ;
- comparing said second data (12) with an expected result (R1) dependent on the first data (11);
- if the comparison is positive, the electronic control unit (ECU) executing said manoeuvre (Mo), said steps relating to the first data (11) and to the second data (12) being repeated until the execution of the manoeuvre (Mo) is complete.

2. Securing method (MTH) according to Claim 1, according to which displaying the first data (11) determines at least one counter-pressure point for a user (U) to grasp the mobile terminal (T) at the zone (Z2) opposite said antenna zone (Z1).

3. Securing method (MTH) according to either one of the preceding Claims 1 and 2, according to which the first data (11) include a point-to-point test (TP).

4. Securing method (MTH) according to Claim 3, according to which the point-to-point test (TP) comprises an angular arrow (F1) forming an indication of a trace to be made with a finger.

5. Securing method (MTH) according to Claim 3, according to which the point-to-point test (TP) comprises:
- a rectilinear double arrow (F2) forming an indication of a horizontal trace to be made with a finger; and
- two points (P1, P1') arranged on either side of said arrow (F2) indicating the limits of the trace.

6. Securing method (MTH) according to the preceding Claim 5, according to which the first data (11) further include at least one positioning point (P2) for one of the thumbs of the user (U).

7. Securing method (MTH) according to Claim 3, according to which the point-to-point test (TP) comprises a circle (C1) with an arrow indicating a displacement direction.

8. Securing method (MTH) according to any one of the preceding Claims 1 to 7, according to which displaying the first data (11) on the screen (E) of the mobile terminal (T) frees up an intermediary zone (Z3) for displaying visual information returned by the motor vehicle (V).

9. Securing method (MTH) according to any one of the preceding Claims 1 to 8, according to which the second data (12) comprise coordinates of the continuous movement (Mv) performed by said user (U).

10. Securing method (MTH) according to any one of the preceding Claims 1 to 9, according to which the antenna zone (Z1) is located on one of the sides of the mobile terminal (T) and the opposite zone (Z2) on the facing side.

11. Securing method (MTH) according to any one of the preceding Claims 1 to 10, according to which it further includes lighting up the screen (E) of said mobile terminal (T) according to its incline (INC).

12. Securing method (MTH) according to any one of the preceding Claims 1 to 11, according to which it further includes displaying information (DAT_INC) relating to the incline (INC) of said mobile terminal (T).

13. Securing method (MTH) according to any one of the preceding Claims 1 to 12, according to which it further comprises a preliminary step of sending a request (RQ) relating to the manoeuvre (Mo) to the electronic control unit (ECU) of the motor vehicle (V).

14. Securing method (MTH) according to any one of the preceding Claims 1 to 13, according to which the manoeuvre (Mo) is a manoeuvre for displacing the motor vehicle (V) between an initial position and a final position.

15. Securing method (MTH) according to any one of the preceding Claims 1 to 14, according to which the comparison of said second data (12) with said expected result (R1) is made by the mobile terminal (T).

16. System (SYS) for securing the remote execution of a manoeuvre (Mo) for parking a motor vehicle (V), according to which said securing system (SYS) includes an electronic control unit (ECU) of the motor vehicle (V) and a mobile terminal (T) comprising a screen (E) and an antenna (A) in an antenna zone (Z1), said securing system (SYS) being suitable for:
- sending, by means of said electronic control unit (ECU), an order to activate first data (11) to said mobile terminal (T);
- receiving said activation order (CD) by means of said mobile terminal (T);
- displaying, by means of said mobile terminal (T), the first data (11) on its screen (E) in a zone (Z2) opposite said antenna zone (Z1) so as to induce the performance of a continuous movement (Mv) by a user (U) on the screen (E) of said mobile terminal (T) at said opposite zone (Z2), said opposite zone (Z2) being defined so that the continuous movement (Mv) of the user (U) does not modify the radiation pattern of said antenna (A);
- generating, by means of said mobile terminal (T), second data (12) relating to the performance of said continuous movement (Mv) by said user (U);
- comparing the second data (12) with an expected result (R1) dependent on the first data (11), said second data being generated relating to the performance of a continuous movement (Mv) by a user (U) on the screen (E) of the mobile terminal (T);
- if the comparison is positive, executing said manoeuvre (Mo) by means of said electronic control unit (ECU).

17. System (SYS) for securing a manoeuvre (Mo) to be applied to a motor vehicle (V) according to the preceding Claim 16, according to which the electronic control unit (ECU) and the mobile terminal (T) are suitable for repeating said steps relating to the first data (11) and to the second data (12) until the execution of the manoeuvre (Mo) is complete.
